# EUROPÄISCHE PATENTSCHRIFT

(11) **EP 2 742 556 B1**
(45) Veröffentlichungstag und Bekanntmachung des Hinweises auf die Patenterteilung: **18.10.2017**
(21) Anmeldenummer: 12758997.6
(22) Anmeldetag: 06.08.2012
(51) Int. Cl.: H01M 12/08, H01M 8/04089, H01M 10/44, H01M 10/48, B64D 13/00, B64D 13/06

(54) **AUFBEREITUNG VON KABINENLUFT EINES LUFTFAHRZEUGS**
CONDITIONING OF CABIN AIR OF AN AIRCRAFT
TRAITEMENT DE L'AIR DE LA CABINE D'UN AÉRONEF

(30) Priorität: 12.08.2011 DE 102011110068
(43) Veröffentlichungstag der Anmeldung: 18.06.2014
(73) Patentinhaber: Airbus Defence and Space GmbH, 85521 Ottobrunn (DE)
(72) Erfinder: STÜCKL, Stefan, 80798 München (DE)
(74) Vertreter: Isarpatent
(86) Internationale Anmeldenummer: PCT/DE2012/100233
(87) Internationale Veröffentlichungsnummer: WO 2013/023649

(56) Entgegenhaltungen:
- WO-A1-2011/030137
- CN-A- 101 576 330
- DE-A1- 3 029 080
- DE-A1- 19 522 804
- DE-A1-102010 051 964
- DE-C1- 4 335 152

## Beschreibung

Die Erfindung betrifft eine Vorrichtung zur Aufbereitung von Kabinenluft aus einem Kabinenraum eines Luftfahrzeugs, das zumindest eine luftatmende Lithium-Luft Batterie aufweist, mit der zumindest ein mit der Lithium-Luft-Batterie verbindbarer elektrischer Verbraucher des Luftfahrzeuges mit elektrischer Energie versorgbar ist. Weiterhin betrifft die Erfindung ein Luftfahrzeug mit einer ebensolchen Vorrichtung.

Die Kabinenbelüftung und Kabinenbedruckung erfordert in heutigen Verkehrsflugzeugen auf Grund der großen Reiseflughöhen ein aufwändiges Druck- und Temperaturregelsystem, mit dem in den in typischen Reisflughöhen (7,5 bis 12 km) anzutreffenden Umgebungsbedingungen (Temperatur der Umgebungsluft ca. -30° bis -60°C, Umgebungsdruck 540 bis 188 hPa) innerhalb der Druckkabine des Luftfahrzeugs für Passagiere angenehme Umgebungsbedingungen hergestellt werden können. Dabei wird die Kabinenluft typischerweise auf einer Temperatur von ca. 22°C aufgeheizt und auf einen Druck von mindestens750 hPa verdichtet. Damit weiterhin innerhalb der Kabine eines Luftfahrzeugs immer eine ausreichende Sauerstoffmenge zur Verfügung steht, wird bei heutigen Verkehrsflugzeugen die gesamte Luftmasse der Kabine ca. sechs Mal pro Stunde durch entsprechend komprimierte Umgebungsluft ausgetauscht.

Bekanntermaßen wird die Erhitzung und Verdichtung der Umgebungsluft heute im Fluge weitgehend durch ein Zapfluftsystem dargestellt, das dem Verdichter der Triebwerke (Gasturbinen) den benötigten Luftmassenstrom (sogenannte Zapfluft, engl: "Bleed Air") bei einer entsprechenden Temperatur und entsprechendem Druck entnimmt. Diese heiße, verdichtete Zapfluft wird je nach gewünschtem Kabinen-Druck und Temperatur mit kalter Umgebungsluft vermischt und in die Kabine geführt. Die Leckraten der Druckkabinen sind dabei üblicherweise vernachlässigbar gering, so dass die Druckkabine selbst als quasi fluiddicht angenommen werden kann. Die verbrauchte Kabinenluft wird heute über Auslassventile (sogenannte "Outflow Valves") in die Flugzeugumgebung ausgestoßen. Dadurch ist ein kontinuierlicher Zapfluftmassenstrom erforderlich, dessen Verdichtung sowohl mechanische Leistung erfordert, den Treibstoffverbrauch der erhöht, als auch den thermodynamischen Kreislauf der Triebwerke negativ beeinflusst.

Bei heutigen Passagierflugzeugen wird somit Umgebungsluft mit einer vorgegebenen Temperatur unter einem vorgegebenen Druck in die Druckkabine geleitet und anschließend über das Outflow-Valve wieder in die Umgebung entlassen. Das Druck- und Temperaturregelsystem ist demzufolge ein offenes System, bei dem die das Luftfahrzeug umgebende Luft entsprechend aufbereitet in die Flugzeugkabine geleitet und anschließend von dort wieder in die Flugzeugumgebung entlassen wird.

Bei künftigen Passagierflugzeugen, insbesondere bei Passagierflugzeugen, die ausschließlich mit Elektromotoren angetrieben werden, sind die vorbeschriebenen Druck- und Temperaturregelsysteme aus Energie- und Effizienzgründen nicht sinnvoll einsetzbar. Solche künftigen Luftfahrzeuge besitzen absehbar Druckkabinen, die druck- und gasdicht sind und daher den Bodenluftdruck (der beim Verschließen der Passagierkabine herrschende Luftdruck am Boden) während des Fluges konservieren (halten) können. Das heißt, dass die Passagierkabine zumindest ab einer vorgebbaren Flughöhe, ein geschlossenes System bildet, in dem die Kabinenluft der Kabine nicht wie bei heutigen Passagierflugzeugen kontinuierlich ausgetauscht wird, sondern als Luftmasse in der Kabine erhalten bleibt. Es besteht dabei jedoch das Problem der Aufbereitung und Umwälzung der Kabinenluft während des Fluges, insbesondere das Problem der Regelung des Kohlendioxidgehalts bzw. der kontinuierlichen Kohlendioxidabscheidung aus der Kabinenluft.

Aus der DE 30 29 080 A1 ist 1 Verfahren zum Bereitstellen von Atemgas für Insassen von druckgeregelten Kabinen in Flugzeugen durch Anreicherung von Sauerstoff in Luft in Adsorbern bekannt. Das Verfahren zeichnet sich dadurch aus, dass ein für eventuelle Verfahrensunterbrechungen erforderlicher Notvorrat an sauerstoffreichem Atemgas mit Hilfe der gleichen Adsorber aus Luft erzeugt wird.

Aus der DE 10 2010 051 964 A1 ist ein sekundäres Lithium-Sauerstoff-Batteriesystem bekannt, das eine hohe Leistungsabgabe und Reversibilität hat. Ein solches Batteriesystem ist geschichtet aufgebaut aus einer Lithium-Anode einer Kathode einem zwischen der Anode und der Kathode angeordneten Separator, der durchlässig ist für Lithiumionen, einem den Separator und die Kathode benetzenden Elektrolyt, einem Kontaktbereich über den der Elektrolyt in Wechselwirkung mit Sauerstoff steht, sowie Elektroden, wobei das Batteriesystem weiterhin ein Reservoir aufweist, das mit dem Elektrolyt gefüllt ist und außerhalb des Schichtaufbaus des Batteriesystems angeordnet ist. Alternativ oder zusätzlich weist das Batteriesystem eine Pumpe auf mittels der der Elektrolyt von dem Reservoir zu der Kathode pumpbar ist. Das Lithium-Sauerstoff-Batteriesystem wird vorzugsweise mit Luft betrieben und ist insbesondere für Kraftfahrzeuge geeignet.

Aus der DE 195 22 804 A1 ist eine Sauerstoffeinspeisung über die Klima-Anlage in geschlossene Räume (insbesondere den KFZ-Innenraum) bekannt. Von einem Druckbehälter ausgehend, mittels eines Druckminderventils vorreduziert, wird über eine Zuleitung (aus entsprechendem Material) Sauerstoff über die Klima-Anlage dem Innenraum zugeführt. Die Sauerstoffzuführung kann in zwei Versionen realisiert werden. In einer ersten Version misst ein Sensor (Luftgütesensor) den Sauerstoffgehalt im Raum und reguliert die Zuführung automatisch. In einer zweiten Version wird die Zuführung von einem Benutzer wahlweise auf automatische oder manuelle Einspeisung eingestellt.

Aus der DE 43 35 152 C1 ist Kabinenumluftsystem zur Klimatisierung von Rumpfeinheiten eines Passagierflugzeuges, das den Frischluftmengenstrom inklusive die Druck und Temperaturüberwachung für einen Druckrumpf regelt und ein Kabinenluftrecycling realisiert, mit einer Frischluftaufbereitungseinheit und einer Luftmischereinrichtung und einem letzterer nachgeordneten Klimabereich, welche luftstrombezogen in Reihe miteinander verbunden sind, bei der zwischen dem Eingang der Frischluftaufbereitungseinheit und einer ihr vorgeordneten Luftmengensteuerungsventileinheit eine luftstrombezogene Verbindung besteht, wobei am Eingang der Luftmengensteuerungsventileinheit Frischluft, die vorzugsweise von mindestens einem Triebwerk bezogene Zapfluft ist, anliegt, bei der eine Trimmluftsteuerungsventileinheit in die luftstrombezogene Verbindung zwischen der Luftmischereinrichtung und dem Klimabereich eingebunden ist, an deren Eingang ein Teil der Frischluft, die der Luftmengensteuerungsventileinheit zugeführt wird, anliegt, bei der alle in einen Luftstrom einbezogene Einheiten und/oder Einrichtungen untereinander und/oder mit dem Klimabereich in Verbindung stehende Einheiten und Einrichtungen mittels Luftstromverbindungsleitungen verbunden sind, wobei der Klimabereich eine gewisse Leckage aufweist, die einen Teil der in ihm verbrauchten Abluft nach außerhalb der Rumpfeinheit abführt, bei der alle leitenden Verbindungen zwischen den funktionell verknüpften Einheiten und/oder Einrichtungen und/ oder dem Klimabereich, die vorzugsweise elektrisch leitend gestaltet sind, dem Informationsaustausch zugeordnet sind. Das darin beschriebene Kabinenumluftsystem zeichnet sich dadurch aus, dass eine Filtereinheit für Partikel, Gerüche und Keime, eine Lüftereinheit und eine Wärmetauschereinheit in den Luftstrom einbezogen und die Einheiten luftstrombezogen in Reihe miteinander verbunden sind, der Klimabereich ausgangsseitig mit dem Eingang der Filtereinheit luftstrombezogen verbunden ist, wobei letzterer ein weiterer Teil der im Klimabereich verbrauchten Abluft als Rezirkulationsluft zugeführt wird, die mit Außenluft, die sich außerhalb des Passagierflugzeuges befindet, gespeiste Wärmetauschereinheit ausgangsseitig mit einem anderen Eingang der Luftmischereinrichtung luftstrombezogen verbunden ist, wobei letzterer aufbereitete Rezirkulationsluft zugeführt wird, eine Kabinendruckregeleinrichtung, eine Klimaanlagenregeleinrichtung und eine Kabinenzonenregeleinrichtung leitend und funktionell in Reihe verbunden sind, wobei ein wechselseitiger Informationsaustausch zwischen diesen Elementen erfolgt, die Luftmengensteuerventileinheit mit der Kabinendruckregeleinrichtung und die Frischluftaufbereitungseinheit mit der Klimaanlagenregeleinrichtung und die Wärmetauschereinheit mit der Kabinenzonenregeleinrichtung leitend und funktionell verbunden ist, wobei ein wechselseitiger Informationsaustausch zwischen diesen Elementen stattfindet, - jeweils ein Eingang der Kabinenzonenregeleinrichtung mit der Luftmischereinrichtung und mit einer funktionellen Schnittstelle, die der Luftstromverbindung zwischen der Luftmischereinrichtung und dem Klimabereich zugeordnet ist, und mit dem Klimabereich leitend verbunden ist, wobei die eingangsseitig mit der Kabinenzonenregeleinrichtung funktionell verbundenen Elemente letzterer einseitig gerichtete Informationen bereitstellen, jeweils ein Ausgang der Kabinenzonenregeleinrichtung mit der Trimmluftsteuerungsventileinheit und mit der Lüftereinheit leitend verbunden ist, wobei die ausgangsseitig mit der Kabinenzonenregeleinrichtung funktionell verbundenen Elemente von letzterer einseitig gerichtete Informationen erhalten.

Aus der WO 2011/030137 A1 ein Gasgenerator bekannt, der zumindest eine wieder aufladbare elektrische Metall-Luft-Zelle umfasst, wobei die Metall-Luft-Zelle ein gasförmiges Produkt erzeugt. Weiterhin umfasst der Gasgenerator ein Drucksystem mit einer Zuleitung, um Luft der Metall-Luft-Zelle zuzuleiten, und einer Ableitung, um aufbereitete Abluft nach deren Durchströmen der Metall-Luft-Zelle an eine Verbrauchsstelle zu befördern.

Der Erfindung liegt die Aufgabe zugrunde, eine Vorrichtung anzugeben, mit der auf zuverlässige und einfache Weise Kabinenluft eines Luftfahrzeugs in Abhängigkeit von einem vorgegebenen Zustand, insbesondere der Flughöhe, aufbereitet wird.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit einer Vorrichtung zur Aufbereitung von Kabinenluft aus einem druck- und gasdicht ausgeführten Kabinenraum eines Luftfahrzeugs gelöst, wobei das Luftfahrzeug zumindest eine Lithium-Luft Batterie aufweist, mit der zumindest ein mit der Lithium-Luft-Batterie verbindbarer elektrischer Verbraucher des Luftfahrzeuges mit elektrischer Energie versorgbar ist.

Ein solcher Verbraucher ist insbesondere ein Elektromotor zum Antrieb des Luftfahrzeugs in der Luft und/oder am Boden. Natürlich kann vorliegend unter dem Begriff "elektrischer Verbraucher" auch jeglicher andere elektrische Verbraucher des Luftfahrzeugs verstanden werden, wie bspw. Avioniksysteme, Beleuchtungen, Bordnetz, Entertainmentsysteme etc.

Unter dem Begriff luftatmende "Lithium-Luft Batterie" wird bekanntermaßen eine Batterie verstanden, in der die Kathode durch Sauerstoff ersetzt wird, so dass zur Energieentnahme der Batterie Sauerstoff (bspw. Umgebungsluft) zugeführt werden muss, insofern ergibt sich das Attribut "luftatmend". Als Anode der Batterie dient metallisches Lithium, das vollständig an der Reaktion teilhaben kann. Da der für die Reaktion benötigte Sauerstoff aus der Umgebungsluft entnommen werden kann, wird die Kapazität einer Lithium-Luft-Zelle alleine durch die Größe der Lithium-Anode bestimmt. Die theoretisch erreichbare Energiedichte liegt, wenn man die Masse des Sauerstoffs nicht berücksichtigt, bei rund 11.000 Wh/kg bei einer Nominalspannung von 2,96 V. Beim Entladeprozess trennt sich auf der Anoden-Seite der Batterie ein Lithium-Atom von einem Elektron, das über den Verbraucher zur Kathoden-Seite Fließt. In der Batterie wandert das Lithium-Ion durch einen Elektrolyten zur Kathodenseite. Aus der Umgebungsluft diffundieren Sauerstoff-Atome in das poröse Kathodenmaterial, wo das Lithium-Ion oxidiert wird und wieder ein Elektron aufnimmt. Bei diesem Prozess entsteht Lithiumperoxid Li₂O₂ gemäß der Formel:

1) 2 Li + O₂ → Li₂O₂

Lithiumperoxid kann bekanntermaßen zur Aufbereitung von Atemluft verwendet werden, indem aus verbrauchter Atemluft verbrauchter Atemluft Kohlendioxid gemäß folgender Gleichung abgeschieden und unter Bildung von Lithiumcarbonat Sauerstoff erzeugt wird:

2) 2 Li₂O₂ + 2 CO₂ → 2Li₂CO₃ + O₂.

Die Lithium-Luft-Batterie ist luft- bzw. druckdicht ausgeführt bzw. gekapselt.

Erfindungsgemäß umfasst die Vorrichtung eine erste Zuleitung, mittels der der Lithium-Luft-Batterie Umgebungsluft von einer Umgebung außerhalb des Luftfahrzeugs zuführbar ist, eine zweite Zuleitung, mittels der der Lithium-Luft-Batterie die Kabinenluft aus dem Kabinenraum zuführbar ist, eine erste Ableitung, mittels der Luft aus der Lithium-Luft-Batterie in die Umgebung außerhalb der Luftfahrzeugs zuführbar ist, und eine zweite Ableitung, mittels der Luft aus der Lithium-Luft-Batterie in den Kabinenraum zuführbar ist. Die Zu- und Ableitungen sind jeweils gas- und druckdicht ausgeführt.

Weiterhin umfasst die erfindungsgemäße Vorrichtung ein mit der ersten und der zweiten Zuleitung sowie mit der ersten und zweiten Ableitung verbundenes schaltbares Mittel, das folgende zwei Schaltzustände aufweist. Das schaltbare Mittel kann bspw. ein in jede Zuleitung bzw. in jede Ableitung geschaltetes Ventil umfassen, das das Durchströmen der jeweiligen Zuleitung/Ableitung ermöglicht oder luft- und druckdicht blockiert. Dem Fachmann sind natürlich weitere geeignete Ausführungsformen des schaltbaren Mittels im Stand der Technik bekannt.

In einem ersten Schaltzustand des Mittels wird der Lithium-Luft-Batterie durch die erste Zuleitung ausschließlich die Umgebungsluft von außerhalb des Flugzeugs zugeleitet, welche nach einem Durchströmen der Lithium-Luft-Batterie ausschließlich durch die erste Ableitung in die Umgebung zurückgeführt wird. In dem ersten Schaltzustand ist eine Zuführung von Kabinenluft zur Lithium-Luft-Batterie durch die zweite Zuleitung und eine Ableitung von Luft aus der Lithium-Luft-Batterie durch die zweite Ableitung unterbunden. In diesem ersten Schaltzustand kommt es somit weder zu einem Entweichen von Kabinenluft durch die zweite Zuleitung oder die zweite Ableitung und die Batterie in die Umgebung des Luftfahrzeugs, noch zu einer Zufuhr von Umgebungsluft in die Kabine. Ist der Kabinenraum selbst druckdicht, so bildet der Kabinenraum auch im ersten Schaltzustand einen geschlossenen Raum, der insbesondere seinen Kabinendruck hält, als auch keinen Gasaustausch mit der Umgebung des Luftfahrzeugs erlaubt.

Der Lithium-Luft-Batterie wird im ersten Schaltzustand lediglich die für eine Energieentnahme erforderliche sauerstoffhaltige Umgebungsluft zugeführt. Der zumindest eine Verbraucher kann nur in diesem ersten Schaltzustand mit der Lithium-Luft-Batterie einen geschlossenen Stromkreis bilden, d.h. elektrische Energie entnehmen.

Eine bevorzugte Weiterentwicklung der erfindungsgemäßen Vorrichtung zeichnet sich dadurch aus, dass in die erste Zuleitung ein Kompressor geschaltet ist, mit dem ein Druck, mit dem die Umgebungsluft der Lithium-Luft-Batterie zuführbar ist, einstellbar ist, insbesondere konstant haltbar ist, und/oder dass in die erste Zuleitung eine Temperaturregelvorrichtung geschaltet ist, mit der eine Temperatur mit der die Umgebungsluft der Lithium-Luft-Batterie zuführbar ist regelbar ist, insbesondere konstant haltbar ist. Dies hat den Vorteil, dass der bei einer Energieentnahme aus der Lithium-Luft-Batterie ablaufende Prozess (siehe Gleichung 2) unter für diesen Prozess optimalen (vorgebbaren) Bedingungen hinsichtlich Druck und Temperatur ablaufen kann.

Weiterhin bevorzugt ist die Lithium-Luft-Batterie derart ausgeführt, dass lediglich eine poröse Kathode der Lithium-Luft-Batterie von der Umgebungsluft und der Kabinenluft durchströmbar ist. Damit wird das durchströmbare Volumen der Lithium-Luft-Batterie verringert und auf den reaktionswesentlichen Teil begrenzt. Beides führt zu einer Erhöhung der Reaktionseffektivität und damit des Wirkungsgrades der Energieumsetzung.

In einem zweiten erfindungsgemäßen Schaltzustand des Mittels ist der Lithium-Luft-Batterie durch die zweite Zuleitung ausschließlich die Kabinenluft zuleitbar, welche nach einem Durchströmen der Lithium-Luft-Batterie ausschließlich durch die zweite Ableitung als aufbereitete Kabinenluft in den Kabinenraum zurückführbar ist, wobei im zweiten Schaltzustand eine Zuführung der Umgebungsluft zur Lithium-Luft-Batterie durch die erste Zuleitung und eine Ableitung von Luft aus der Lithium-Luft-Batterie durch die erste Ableitung unterbunden ist. Auch in diesem zweiten Schaltzustand kommt es somit weder zu einem Entweichen von Kabinenluft über die zweite Zuleitung oder die zweite Ableitung und die Batterie in die Umgebung des Luftfahrzeugs, noch zu einer Zufuhr von Umgebungsluft in die Kabine. Ist der Kabinenraum selbst druckdicht, so bildet der Kabinenraum zusammen mit der zweiten Zuleitung, der Lithium-Luft-Batterie und der zweiten Ableitung auch im zweiten Schaltzustand ein geschlossenes System, indem der Kabinendruck gehalten wird, und auch kein Gasaustausch mit der Umgebung des Luftfahrzeugs erfolgt.

In dem zweiten Schaltzustand dient die Lithium-Luft-Batterie ausschließlich der Aufbereitung der Kabinenluft, indem aus der Kabinenluft während ihres Durchströmens der Lithium-Luft-Batterie (bevorzugt deren poröser Kathode) Kohlendioxid abgeschieden und der Sauerstoffgehalt der Kabinenluft gemäß der vorstehend angegebenen Gleichung 2) angereichert wird. Eine Energieentnahme aus der Batterie durch den zumindest einen Verbraucher erfolgt im zweiten Schaltzustand nicht, d.h. ein geschlossener Stromkreis mit dem Verbraucher und der Batterie lässt sich im zweiten Schaltzustand nicht erzeugen.

Schließlich umfasst die erfindungsgemäße Vorrichtung ein Steuergerät, mit dem das schaltbare Mittel abhängig von einem aktuellen Lade-Zustand der Lithium-Luft-Batterie steuerbar ist. Das Steuergerät umfasst bevorzugt eine Prozessoreinheit, eine Speichereinheit, ein Programmmittel, sowie ein Eingabemittel, mittels der das Programmmittel veränderbar ist.

Die Erfindung eignet sich insbesondere für die Aufbereitung der Kabinenluft von künftigen Luftfahrzeugen, die Elektromotoren zusammen Lithium-Luft-Batterien zum Antrieb benutzen, und die eine druck- und gasdicht ausgeführte Druckkabine aufweisen. In diesem Fall kann die kontinuierliche Verdichter-Arbeit eines konventionellen Bedruckungssystems bzw. eines elektrisch betriebenen Bedruckungssystems entfallen, was die Energieeffizienz solcher Luftfahrzeuge deutlich erhöht. Weiterhin kann der Feuchtigkeitsgehalt in der Kabinenluft gesteigert werden, da diese nicht mit der in großer Flughöhe extrem trockenen Außenluft belüftet wird, sondern ein geschlossenes System vorliegt, aus dem die Kabinenluft nicht entweicht sondern lediglich entsprechend aufbereitet wird. Ein höherer Feuchtegehalt der Kabinenluft steigert den Passagierkomfort spürbar. Zur weiteren Aufbereitung der Kabinenluft umfasst die Vorrichtung bevorzugt Filter (bspw. Aktivkohle enthaltende Filter) oder Filtersysteme zur Luftreinigung, insbesondere zur Entfernung von Gerüchen aus der Kabinenluft.

Eine bevorzugte Weiterbildung der erfindungsgemäßen Vorrichtung zeichnet sich dadurch aus, dass das Steuergerät derart ausgeführt und eingerichtet ist, dass sofern der aktuelle Ladezustand der Lithium-Luft-Batterie über einem vorgegebenen Wert liegt, das Mittel in den ersten Schaltzustand geschaltet wird/ist, und erst, wenn der aktuelle Ladezustand diesen vorgegebenen Wert unterschreitet, das Mittel in den zweiten Schaltzustand schaltbar ist.

Damit steht die Lithium-Luft-Batterie im ersten Schaltzustand nur zur Energieversorgung des zumindest einen Verbrauchers zur Verfügung. Wie vorstehend erläutert, wird der Lithium-Luft-Batterie (der Kathode) hierfür über die erste Zuleitung Umgebungsluft zugeführt, wobei sich beim Durchströmen in der Batterie Lithiumperoxid anreichert. Nach dem Durchströmen der Lithium-Luft-Batterie wird die Luft durch die erste Ableitung wieder in die Umgebung des Flugzeugs zurückgeführt. Der für die Energieentnahme erforderliche Massendurchsatz an Umgebungsluft hängt von der Batteriegröße wie auch von der Energieentnahme ab und ist entsprechend zu wählen. Erst wenn durch die Energieentnahme in der Lithium-Luft-Batterie eine ausreichende Menge an Lithiumperoxid gebildet wurde, kann die Lithium-Luft-Batterie grundsätzlich für die Aufbereitung der Kabinenluft gemäß Gleichung 2) genutzt werden.

Die Zunahme der Lithiumperoxidmenge in der Lithium-Luft-Batterie geht einher mit einer entsprechenden Abnahme der in der Lithium-Luft-Batterie gespeicherten Energie, d.h. einer Abnahme des Ladezustands der Batterie. Der Ladezustand (Ladezustandswert) wird vorliegend in Prozent des maximalen Ladezustands angegeben. Bei vollständiger Ladung der Batterie beträgt der Ladezustandswert 100%, bei vollständiger Entladung beträgt der Ladezustandswert 0 %. Je geringer der Ladezustandswert, desto höher ist die Lithiumperoxidkonzentration in der Lithium-Luft-Batterie.

Die Umschaltung des Mittels in den zweiten Schaltzustand erfolgt in dieser Weiterbildung sobald der vorgegebene Wert des Ladezustands der Lithium-Luft-Batterie unterschritten wird. Der Wert ist je nach Anwendung geeignet zu wählen. Der vorgegebene Wert liegt bevorzugt 0 bis 90 % des maximalen Ladezustandswertes, insbesondere beträgt der Wert bevorzugt 80 %, 70 %, 60 %, 50 %, 40 %, 30 %, 20 %, 10 %, oder 5 % des maximalen Ladezustandswertes. Für die Aufbereitung der Kabinenluft sind natürlich kleine Ladezustandswerte günstig, da hier die größte Menge an Lithiumdioxid in der Batterie vorliegt, so dass die Aufbereitungseffektivität am höchsten ist.

In einer bevorzugten Weiterbildung ist das Steuergerät derart ausgeführt und eingerichtet, dass sobald der aktuelle Ladezustand den vorgegebenen Wert unterschreitet, das Mittel automatisch in den zweiten Schaltzustand schaltet. Bei geeigneter Wahl des vorgegebenen Wertes kann sichergestellt werden, dass die Umschaltung von erstem Schaltzustand in den zweiten Schaltzustand immer im optimalen Ladezustandswert erfolgt.

Das Schalten in den zweiten Schaltzustand kann zusätzlich in Abhängigkeit eines Luftfahrzeugzustandes erfolgen. Unter dem Begriff "Zustand des Luftfahrzeugs" wird vorliegend weit gefasst verstanden, er umfasst bspw. folgende Zustände: das Luftfahrzeug ist noch am Boden, das Flugzeug rollt, das Flugzeug beschleunigt, das Flugzeug fliegt, Zustände der Konfiguration des Luftfahrzeugs wie Fahrwerk aus/eingefahren, Klappen gesetzt etc. In dieser Weiterbildung ist es bspw. möglich zwei oder mehrere Bedingungen für das Umschalten vom ersten Schaltzustand des Mittels in den zweiten Schaltzustand des Mittels zu definieren. So kann bspw. ein automatisches Umschalten vom ersten Schaltzustand in den zweiten Schaltzustand dann automatisch erfolgen, wenn folgende Bedingungen vorliegen:
- der Ladezustandswert beträgt weniger als 60%,
- das Flugzeug fliegt, und
- die Flughöhe überschreitet 914.4 m (3.000 ft).

Damit kann eine erste von mehreren Lithium-Luft-Batterien eines Elektropassagierflugzeugs für alle Bodenaktivitäten inklusive des Startvorgangs und ersten Steigfluges genutzt werden, um den Elektromotor zum Antrieb des Luftfahrzeugs und ggf. weitere Systeme mit elektrischer Energie zu versorgen, bevor die Energieversorgung bei oder vor Eintreten der obigen Bedingungen von einer der weiteren Batterien übernommen wird und die erste Batterie zur Aufbereitung der Kabinenluft genutzt wird.

Die Aufbereitung der Kabinenluft setzt, wie beschrieben, eine ausreichende Menge an Lithiumperoxid in der Batterie voraus, das durch die Aufbereitung der Kabinenluft verbraucht wird. Bevorzugt ist daher vorgesehen, dass die Lithium-Luft-Batterie nur solange zur Aufbereitung der Kabinenluft genutzt wird, solange genügend Lithiumperoxid in der Batterie vorhanden ist. Ist dies nicht mehr der Fall, wird bevorzugt eine weitere an Bord vorhandene Lithium-Luft-Batterie zur Luftaufbereitung genutzt, sofern diese bspw. die obigen Bedingungen erfüllt.

Ein Unterschreiten einer vorgebbaren Lithiumperoxidkonzentration in der Lithium-Luft-Batterie, die eine weitere Nutzung dieser Batterie zur Luftaufbereitung nicht mehr erlaubt, kann bspw. anhand der Überwachung der Differenz der Kohlendioxid- und/oder Sauerstoffkonzentration in der zweiten Zuleitung und der Kohlendioxid- und/oderSauerstoffkonzentration in der zweiten Ableitung erfolgen. Entsprechende Messmittel sind dem Fachmann bekannt.

In einer weiteren Ausführungsform ist das Steuergerät derart ausgeführt und eingerichtet, dass sobald der aktuelle Ladezustand den vorgegebenen Wert unterschreitet, das Mittel erst durch eine manuelle Betätigung eines Eingabemittels in den zweiten Schaltzustand schaltbar ist. In dieser Variante ist es bspw. möglich die Flugzeugbesatzung, insbesondere den Piloten die letztliche Entscheidung darüber zu überlassen, wann die Umschaltung von Nutzung einer Lithium-Luft-Batterie als Energiequelle bzw. zur Luftaufbereitung erfolgt. Denkbar ist auch eine sogenannte "Override"-Funktion mit der eine automatische Umschaltung wieder rückgängig oder vorzeitig erfolgen kann. Dadurch ergeben sich für die Crew des Luftfahrzeugs direkte Eingriffsmöglichkeiten, so dass die entsprechende Nutzung der Lithium-Luft-Batterien an eine vorherrschende Situation gezielt angepasst werden kann. Typischerweise sind mehrere Lithium-Luft-Batterien im Luftfahrzeug vorhanden, wobei bevorzugt sowohl eine automatische Nutzungssteuerung aller Batterien, als auch die Möglichkeit der gezielten Steuerung jeder einzelnen Batterie möglich ist.

Eine weitere besonders bevorzugte Weiterbildung der erfindungsgemäßen Vorrichtung zeichnet sich dadurch aus, dass in die erste Zuleitung ein Kompressor geschaltet ist, mit dem ein Druck mit dem die Umgebungsluft der Lithium-Luft-Batterie zuführbar ist einstellbar ist, insbesondere konstant haltbar ist, und/oder dass in die erste Zuleitung eine Temperaturregelvorrichtung geschaltet ist, mit der eine Temperatur mit der die Umgebungsluft der Lithium-Luft-Batterie zuführbar ist regelbar ist, insbesondere konstant haltbar ist. Mit der Regelbarkeit der Temperatur und/oder des Drucks mit der Umgebungsluft der Lithium-Luft-Batterie zugeführt werden, können die Reaktionsbedingungen für die Reaktion gemäß Gleichung 2) optimal eingestellt werden und somit die Reaktionseffektivität erhöht werden.

Ein weiterer Aspekt der Erfindung betrifft ein Luftfahrzeug, insbesondere Luftfahrzeug, das zu dessen Antrieb zumindest einen Elektromotor vorhanden ist, mit einer vorstehend beschriebenen Vorrichtung. Bevorzugt weist das Flugzeug eine druck- und gasdichte Druckkabine auf.

Weitere Vorteile, Merkmale und Einzelheiten ergeben sich aus der nachfolgenden Beschreibung, in der unter Bezug auf die Zeichnungen ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen.
Es zeigen:
- Fig. 1: eine schematische Darstellung der erfindungsgemäßen Vorrichtung in einem ersten Schaltzustand, und
- Fig. 2: eine schematische Darstellung der erfindungsgemäßen Vorrichtung in einem zweiten Schaltzustand.

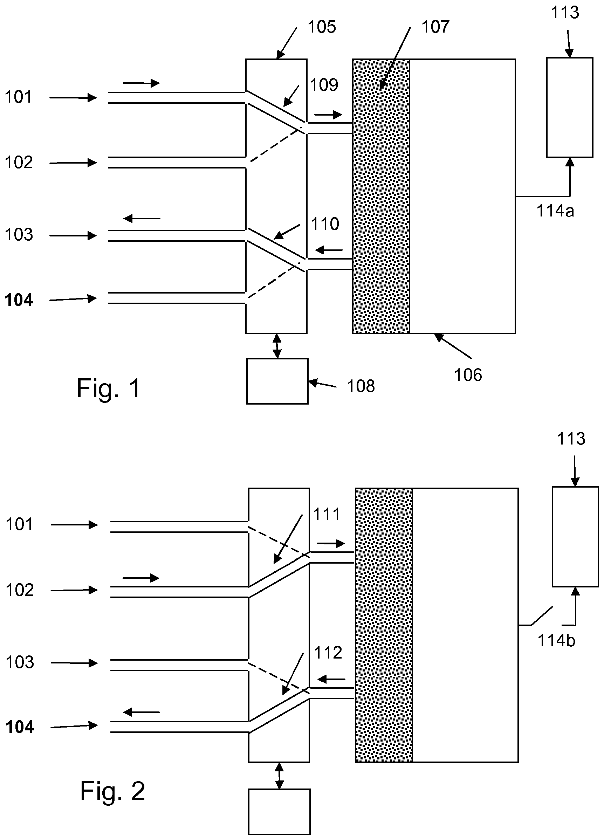

Dem beschrieben Ausführungsbeispiel in Fig.1 und Fig.2 liegt ein rein elektromotorisch angetriebenes Luftfahrzeug zugrunde, das eine im verschlossenen Zustand vollständig gas- und druckdichte Druckkabine aufweist.

**Fig. 1** zeigt eine schematische Darstellung der erfindungsgemäßen Vorrichtung zur Aufbereitung von Kabinenluft aus einem Kabinenraum (nicht dargestellt) des Luftfahrzeugs (nicht dargestellt), das mehrere Lithium-Luft Batterien aufweist, von denen nur eine 106 dargestellt ist. Mit der Batterie 106 ist in Fig.1 ein Elektromotor (Verbraucher) versorgbar, der einen Propeller (nicht dargestellt) zum Antrieb des Luftfahrzeugs antreibt. Die vorliegende Vorrichtung umfasst: eine erste Zuleitung 101, mittels der der Lithium-Luft-Batterie 106 Umgebungsluft von einer Umgebung außerhalb des Luftfahrzeugs zuführbar ist (die Strömungsrichtungen werden in den Figuren durch Pfeile angedeutet), eine zweite Zuleitung 102, mittels der der Lithium-Luft-Batterie 106 die Kabinenluft aus dem Kabinenraum (nicht dargestellt) zuführbar ist, eine erste Ableitung 103, mittels der Luft aus der Lithium-Luft-Batterie 106 in die Umgebung außerhalb der Luftfahrzeugs zuführbar ist, und eine zweite Ableitung 104, mittels der Luft aus der Lithium-Luft-Batterie 106 in den Kabinenraum zuführbar ist. Weiterhin umfasst die dargestellte Vorrichtung ein mit der ersten 101 und der zweiten 102 Zuleitung sowie mit der ersten 103und zweiten 104 Ableitung verbundenes schaltbares Mittel 105, mit dem in dem dargestellten ersten Schaltzustand des Mittels 105 der Lithium-Luft-Batterie 106 durch die erste Zuleitung 101 ausschließlich die Umgebungsluft von außerhalb des Flugzeugs zuleitbar ist, welche nach einem Durchströmen einer porösen Kathode 107 der Lithium-Luft-Batterie 106 ausschließlich durch die erste Ableitung 103 in die Umgebung zurückführbar ist. Im dargestellten ersten Schaltzustand ist eine Zuführung von Kabinenluft zur Lithium-Luft-Batterie 106 durch die zweite Zuleitung 102 und eine Ableitung von Luft aus der Lithium-Luft-Batterie 106 durch die zweite Ableitung 104 unterbunden ist, was durch die gestrichelten Linien angedeutet ist. Das Mittel 105 ist mit einem Steuergerät 108 verbunden, mit dem das schaltbare Mittel 105 abhängig von einem aktuellen Lade-Zustand der Lithium-Luft-Batterie 106 steuerbar ist. In dem dargestellten ersten Schaltzustand des Mittels 105 kann die Lithium-Luft-Batterie ausschließlich zur Energieversorgung des Verbrauchers 113 genutzt werden. Die elektrische Verbindung 114a zwischen Batterie 106 und Verbraucher 113 ist daher geschlossen. Im schaltbaren Mittel 105 ist weiterhin die erste Zuleitung über die Verbindung 109 mit der Batterie 106 verbunden. Weiterhin ist die Batterie 106 über die Verbindung 110 mit der ersten Ableitung 103 verbunden, so dass die Umgebungsluft, die in die Batterie 106 hineinströmt auch wieder aus der Batterie herausströmt.

**Fig. 2** basiert auf der **Fig.1** und zeigt einen zweiten Schaltzustand des Mittels 105 bei dem der Lithium-Luft-Batterie 106 durch die zweite Zuleitung 102 ausschließlich die Kabinenluft zuleitbar ist, welche nach einem Durchströmen der Lithium-Luft-Batterie 106 ausschließlich durch die zweite Ableitung 104 als aufbereitete Kabinenluft in den Kabinenraum zurückführbar ist. Im dargestellten zweiten Schaltzustand ist eine Zuführung der Umgebungsluft zur Lithium-Luft-Batterie 106 durch die erste Zuleitung 101 und eine Ableitung von Luft aus der Lithium-Luft-Batterie 106 durch die erste Ableitung103 unterbunden, was durch die gestrichelten Linien angedeutet ist. Im schaltbaren Mittel 105 ist weiterhin die zweite Zuleitung 102 über die Verbindung 111 mit der Batterie 106 verbunden. Weiterhin ist die Batterie 106 über die Verbindung 112 mit der zweiten Ableitung 104 verbunden, so dass die Kabinenluft, welche in die Batterie 106 hineinströmt auch wieder aus der Batterie herausströmt. Der dargestellte zweite Schaltzustand des Mittels ermöglicht eine Aufbereitung der Kabinenluft beim Durchströmen der Lithium-Luft-Batterie 106 durch eine Kohlendioxidabscheidung aus der Kabinenluft und eine Sauerstoffzufuhr, insbesondere durch Reaktion der Kabinenluft mit dem in der Lithium-Luft-Batterie 106 vorhandenen Lithiumperoxid Li₂O₂. Im zweiten Schaltzustand kann der elektrische Verbraucher 113 nicht mit elektrischer Energie versorgt werden, was durch die offene elektrische Verbindung 114b angedeutet ist.

Die erfindungsgemäße Vorrichtung kann bspw. derart gesteuert werden, dass folgendes Betriebsszenario des Luftfahrzeugs realisiert wird:
1. Das Luftfahrzeug rollt am Boden aus eigener Kraft (Schub durch den vom Elektromotor 113 angetriebene Propeller) zur Startbahn und startet. Die Außenluft wird in geringer Flughöhe noch zur direkten Belüftung der Kabinen ohne Verdichtung der Außenluft genutzt. Während des Rollens und des Startvorgangs wird ein Teil der Batterien entladen und mit Lithiumperoxid angereichert.
2. Das Luftfahrzeug erreicht eine Flughöhe, in der eine Bedruckung der Kabine notwendig wird. Dafür werden die Batterien, die für den Start und frühen Steigflug verwendet wurden von der Außenluft abgeschottet und durch das schaltbare Mittel mit der Kabine verbunden. Das Umschalten vom ersten Schaltzustand in den zweiten Schaltzustand für diese Batterien erfolgt derart, dass in der Kabine kein Druckstoß bemerkbar ist. Die Kabine ist nunmehr als geschlossenes System mit den Batterien verbunden, die bereits durch genügende Entladung eine ausreichende Menge an Lithiumperoxid aufweisen und somit zur Aufbereitung der Kabinenluft verwendet werden. Durch Umwälzung der Kabinenluft wird die verbrauchte Kabinenluft aus dem Kabinenraum durch die porösen Kathoden der Batterien geführt, von CO₂ gereinigt, mit O₂ angereichert wieder in den Kabinenraum zurückgeführt.
3. Im weiteren Verlauf des Fluges werden jeweils weitere entladene Batterien vom schaltbaren Mittel 105 von der Außenluft abgetrennt und in das Klimasystem eingebunden.
4. Nachdem im Sinkflug wieder eine geeignete geringe Höhe erreicht ist (bspw. 2.500m NN), wird die Druckkabine mit Außenluft versorgt, während bspw. alle Batterien vom schaltbaren Mittel 104 in eine ersten Schaltzustand geschaltet werden, und somit zur Energienutzung, bspw. für ein Durchstartmanöver verfügbar sind.

Um die benötigten Mengen von Lithiumperoxid an Bord des Luftfahrzeugs zu erzeugen sind entsprechend große Batterien gefordert. Daher eignet sich die beschriebene Vorrichtung vor allem für elektrisch angetriebene Luftfahrzeuge, deren Energie hauptsächlich oder teilweise in einer luftatmenden Lithium-Batterie gespeichert ist.

### Bezugszeichenliste

- 101: erste Zuleitung
- 102: zweite Zuleitung
- 103: erste Ableitung
- 104: zweite Ableitung
- 105: schaltbares Mittel
- 106: Lithium-Luft-Batterie
- 107: poröse Kathode
- 108: Steuergerät
- 109: Verbindung der ersten Zuleitung mit der Batterie gemäß erstem Schaltzustand
- 110: Verbindung der ersten Ableitung mit der Batterie gemäß erstem Schaltzustand
- 111: Verbindung der zweiten Zuleitung mit der Batterie gemäß zweitem Schaltzustand
- 112: Verbindung der zweiten Ableitung mit der Batterie gemäß zweitem Schaltzustand
- 113: elektrischer Verbraucher, elektrischer Motor zum Antrieb eines Propellers
- 114a: elektrische Verbindung zwischen Lithium-Luft-Batterie und Verbraucher geschlossen
- 114b: elektrische Verbindung zwischen Lithium-Luft-Batterie und Verbraucher offen

## Patentansprüche

1. Vorrichtung zum Betreiben einer Lithium-Luft-Batterie (106) eines Luftfahrzeugs, mit der zumindest ein mit der Lithium-Luft-Batterie (106) verbindbarer elektrischer Verbraucher (113) des Luftfahrzeuges mit elektrischer Energie versorgbar ist, und zur Aufbereitung von Kabinenluft aus einem druck- und gasdicht ausgeführten Kabinenraum des Luftfahrzeugs mit:
- einer ersten Zuleitung (101), mittels der der Lithium-Luft-Batterie (106) Umgebungsluft von einer Umgebung außerhalb des Luftfahrzeugs zuführbar ist,
- einer zweiten Zuleitung (102), mittels der der Lithium-Luft-Batterie (106) die Kabinenluft aus dem Kabinenraum zuführbar ist,
- einer ersten Ableitung (103), mittels der Luft aus der Lithium-Luft-Batterie (106) in die Umgebung außerhalb der Luftfahrzeugs zuführbar ist,
- einer zweiten Ableitung (104), mittels der Luft aus der Lithium-Luft-Batterie (106) in den Kabinenraum zuführbar ist,
- einem mit der ersten (101) und der zweiten (102) Zuleitung sowie mit der ersten (103) und zweiten (104) Ableitung verbundenen schaltbaren Mittel (105), mit dem in einem ersten Schaltzustand des Mittels (105) der Lithium-Luft-Batterie (106) durch die erste Zuleitung (101) ausschließlich die Umgebungsluft von außerhalb des Flugzeugs zugeleitet wird, welche nach einem Durchströmen der Lithium-Luft-Batterie (106) ausschließlich durch die erste Ableitung (103) in die Umgebung zurückgeführt wird, wobei im ersten Schaltzustand eine Zuführung von Kabinenluft zur Lithium-Luft-Batterie (106) durch die zweite Zuleitung (102) und eine Ableitung von Luft aus der Lithium-Luft-Batterie (106) durch die zweite Ableitung (104) unterbunden ist, und mit dem in einem zweiten Schaltzustand des Mittels (105) der Lithium-Luft-Batterie (106) durch die zweite Zuleitung (102) ausschließlich die Kabinenluft zugeleitet wird, welche nach einem Durchströmen der Lithium-Luft-Batterie (106) ausschließlich durch die zweite Ableitung (104) als aufbereitete Kabinenluft in den Kabinenraum zurückgeführt wird, wobei im zweiten Schaltzustand eine Zuführung der Umgebungsluft zur Lithium-Luft-Batterie (106) durch die erste Zuleitung (101) und eine Ableitung von Luft aus der Lithium-Luft-Batterie (106) durch die erste Ableitung (103) unterbunden ist, und
- einem Steuergerät (108), mit dem das schaltbare Mittel (105) abhängig von einem aktuellen Lade-Zustand der Lithium-Luft-Batterie (106) gesteuert wird,
- wobei:
- der Kabinenraum zusammen mit der zweiten Zuleitung (102), der Lithium-Luft-Batterie (106) und der zweiten Ableitung (104) druckdichtes geschlossenes System bildet,
- der elektrische Verbraucher (113) nur im ersten Schaltzustand mit der Lithium-Luft-Batterie (106) mit elektrischer Energie versorgt wird, ,
- das Schalten in den zweiten Schaltzustand nur dann erfolgt, wenn ein vorgebbarer Zustand des Luftfahrzeugs vorliegt, und
- die Aufbereitung der Kabinenluft im zweiten Schaltzustand beim Durchströmen der Lithium-Luft-Batterie (106) durch eine Kohlendioxidabscheidung aus der Kabinenluft und eine Sauerstoffzufuhr, insbesondere durch Reaktion der Kabinenluft mit dem in der Lithium-Luft-Batterie (106) vorhandenen Lithiumperoxid Li₂O₂ erfolgt.

2. Vorrichtung gemäß Anspruch 1,
**dadurch gekennzeichnet, dass** das Steuergerät (108) derart ausgeführt und eingerichtet ist, dass sofern der aktuelle Ladezustand der Lithium-Luft-Batterie (106) über einem vorgegebenen Wert liegt, das Mittel (105) in den ersten Schaltzustand geschaltet wird/ist, und erst, wenn der aktuelle Ladezustand diesen vorgegebenen Wert unterschreitet, das Mittel (105) in den zweiten Schaltzustand schaltbar ist.

3. Vorrichtung gemäß Anspruch 2,
**dadurch gekennzeichnet, dass** der vorgegebene Wert zwischen 0 bis 90 % des maximalen Ladezustandswertes liegt, insbesondere: 80 %, 70 %, 60 %, 50 %, 40 %, 30 %, 20 %, 10 %, oder 5 % des maximalen Ladezustandswertes beträgt.

4. Vorrichtung gemäß Anspruch 2 oder 3,
**dadurch gekennzeichnet, dass** das Steuergerät (108) derart ausgeführt und eingerichtet ist, dass sobald der aktuelle Ladezustand den vorgegebenen Wert unterschreitet, das Mittel (105) automatisch in den zweiten Schaltzustand schaltbar ist.

5. Vorrichtung gemäß einem der Ansprüche 1 bis 4,
**dadurch gekennzeichnet, dass** der vorgebbare Zustand der Luftfahrzeugs folgende Bedingungen umfasst:
- der Ladezustandswert der Lithium-Luft-Batterie (106) beträgt weniger als 60%,
- das Luftfahrzeug fliegt, und
- die Flughöhe überschreitet 914,4 m über Grund.

6. Vorrichtung gemäß Anspruch 2 oder 3,
**dadurch gekennzeichnet, dass** das Steuergerät (108) derart ausgeführt und eingerichtet ist, dass sobald der aktuelle Ladezustand diesen vorgegebenen Wert unterschreitet, das Mittel (105) erst durch eine manuelle Betätigung eines Eingabemittels in den zweiten Schaltzustand schaltbar ist.

7. Vorrichtung gemäß einem der Ansprüche 1 bis 6,
**dadurch gekennzeichnet, dass** der mindestens eine Verbraucher (113) ein Elektromotor zum Antrieb des Luftfahrzeugs ist.

8. Vorrichtung gemäß einem der Ansprüche 1 bis 7,
**dadurch gekennzeichnet, dass** in die erste Zuleitung (101) ein Kompressor geschaltet ist, mit dem ein Druck mit dem die Umgebungsluft der Lithium-Luft-Batterie (106) zuführbar ist einstellbar ist, insbesondere konstant haltbar ist, und/oder dass in die erste Zuleitung (101) eine Temperaturregelvorrichtung geschaltet ist, mit der eine Temperatur mit der die Umgebungsluft der Lithium-Luft-Batterie (106) zuführbar ist regelbar ist, insbesondere konstant haltbar ist.

9. Vorrichtung gemäß einem der Ansprüche 1 bis 8,
**dadurch gekennzeichnet, dass** die Lithium-Luft-Batterie (106) eine poröse Kathode (107) aufweist, und die Lithium-Luft-Batterie (106) derart ausgeführt ist, dass lediglich die poröse Kathode (107) von der Umgebungsluft und der Kabinenluft durchströmbar ist.

10. Luftfahrzeug mit einem druck- und gasdichten Kabinenraum und einer Vorrichtung gemäß einem der Ansprüche 1 bis 9, wobei das Luftfahrzeug eine oder mehrere Lithium-Luft-Batterien (106) aufweist.

11. Luftfahrzeug nach Anspruch 10,
**dadurch gekennzeichnet, dass** der Verbraucher (113) ein Elektromotor zum Antrieb des Luftfahrzeugs ist.

## Claims

1. Device for operating a lithium air battery (106) of an aircraft, by means of which it is possible to supply at least one electrical consumer (113) of the aircraft with electrical energy and said electrical consumer can be connected to the lithium air battery (106), and said device also being for conditioning cabin air from a cabin space of the aircraft, said cabin space being provided in a pressure-tight and gas-tight manner, said device comprising:
- a first feed line (101) by means of which it is possible to supply ambient air from an environment outside of the aircraft to the lithium air battery (106),
- a second feed line (102) by means of which it is possible to supply the cabin air from the cabin space to the lithium air battery (106),
- a first discharge line (103) by means of which it is possible to supply air from the lithium air battery (106) into the environment outside of the aircraft,
- a second discharge line (104) by means of which it is possible to supply air from the lithium air battery (106) into the cabin space,
- a switchable means (105) that is connected to the first (101) and the second (102) feed line and also to the first (103) and second (104) discharge line, and using said switchable means in a first switching state of the means (105) the lithium air battery (106) is supplied by means of the first feed line (101) exclusively with ambient air from outside the aircraft and after said air has flowed through the lithium air battery (106) said air is returned exclusively by means of the first discharge line (103) into the environment, wherein in the first switching state a supply of cabin air to the lithium air battery (106) by means of the second feed line (102) is prevented and a discharge of air from the lithium air battery (106) by means of the second discharge line (104) is prevented, and using said switchable means in a second switching state of the means (105) exclusively the cabin air is supplied by means of the second feed line (102) to the lithium air battery (106) and after flowing through the lithium air battery (106) said cabin air is returned exclusively by means of the second discharge line (104) as conditioned air into the cabin space, wherein in the second switching state a supply of the ambient air to the lithium air battery (106) by means of the first feed line (101) is prevented and a discharge of air from the lithium air battery (106) by means of the discharge line (103) is prevented, and
- a control device (108) with which the switchable means (105) is controlled in dependence upon a prevailing state of charge of the lithium air battery (106),
- wherein:
- the cabin space together with the second feed line (102), the lithium air battery (106) and the second discharge line (104) forms a pressure-tight closed system,
- the electrical consumer (113) is supplied only in the first switching state with electrical energy using the lithium air battery (106),
- the procedure of switching into the second switching state is only then performed if a predeterminable state of the aircraft is present, and
- the cabin air is conditioned in the second switching state when flowing through the lithium air battery (106) by means of carbon dioxide separation from the cabin air and a supply of oxygen in particular by means of a reaction of the cabin air with the lithium peroxide Li₂O₂ that is present in the lithium air battery (106).

2. Device according to claim 1,
**characterised in that** the control device (108) is provided and configured in such a manner that if the prevailing state of charge of the lithium air battery (106) is above a predetermined value the means (105) is/will be switched into a first switching state, and only if the prevailing state of charge is below said predetermined value can the means (105) be switched into the second switching state.

3. Device according to claim 2,
**characterised in that** the predetermined value is between 0 to 90% of the maximum state of charge value, in particular: is 80%, 70%, 60%, 50%, 40%, 30%, 20%, 10% or 5% of the maximum state of charge value.

4. Device according to claim 2 or 3,
**characterised in that** the control device (108) is provided and configured in such a manner that as soon as the prevailing state of charge is below the predetermined value, the means (105) can be automatically switched into the second switching state.

5. Device according to any one of the claims 1 to 4,
**characterised in that** the predetermined state of the aircraft comprises the following conditions:
- the state of charge value of the lithium air battery (106) is less than 60%,
- the aircraft is flying, and
- the flight altitude exceeds 914.4 m above ground.

6. Device according to claim 2 or 3,
**characterised in that** the control device (108) is provided and configured in such a manner that as soon as the prevailing state of charge is below said predetermined value, the means (105) can only then be switched into the second switching state by means of manually actuating an input means.

7. Device according to any one of the claims 1 to 6,
**characterised in that** the at least one consumer (113) is an electric motor for powering the aircraft.

8. Device according to any one of the claims 1 to 7,
**characterised in that** a compressor is connected into the first feed line (101) and a pressure at which the ambient air can be supplied to the lithium air battery (106) can be set, in particular can be constantly maintained, using said compressor and/or that a temperature regulating device is connected into the first feed line (101) and a temperature at which the ambient air can be supplied to the lithium air battery (106) can be regulated, in particular can be constantly maintained, using said temperature regulating device.

9. Device according to any one of the claims 1 to 8,
**characterised in that** the lithium air battery (106) comprises a porous cathode (107), and the lithium air battery (106) is provided in such a manner that the ambient air and the cabin air can only flow through the porous cathode (107).

10. Aircraft having a pressure-tight and gas-tight cabin space and a device according to any one of the claims 1 to 9, wherein the aircraft comprises one or multiple lithium air batteries (106).

11. Aircraft according to claim 10,
**characterised in that** the consumer (113) is an electric motor for powering the aircraft.

## Revendications

1. Dispositif destiné à l'exploitation d'une batterie lithium-air (106) d'un aéronef, au moyen de laquelle au moins un consommateur électrique (113) de l'aéronef raccordable à la batterie lithium-air (106) peut être alimenté en énergie électrique, et au traitement de l'air de cabine provenant d'un intérieur de cabine de l'aéronef réalisé étanche à la pression et aux gaz, comportant :
- une première conduite d'amenée (101), au moyen de laquelle de l'air ambiant provenant d'un environnement extérieur à l'aéronef peut être alimenté dans la batterie lithium-air (106),
- une seconde conduite d'amenée (102), au moyen de laquelle l'air de la cabine provenant de l'intérieur de la cabine peut être alimenté dans la batterie lithium-air (106),
- une première conduite d'évacuation (103), au moyen de laquelle de l'air provenant de la batterie lithium-air (106) peut être alimenté dans l'environnement extérieur à l'aéronef,
- une seconde conduite d'évacuation (104), au moyen de laquelle de l'air provenant de la batterie lithium-air (106) peut être alimenté dans l'intérieur de la cabine,
- un moyen (105) commutable raccordé à la première (101) et la seconde (102) conduite d'amenée ainsi qu'à la première (103) et la seconde (104) conduite d'évacuation, au moyen duquel, dans un premier état de commutation du moyen (105), la batterie lithium-air (106) est alimentée uniquement en air ambiant provenant de l'extérieur de l'aéronef, qui est reconduit dans l'environnement après avoir traversé la batterie lithium-air (106) uniquement par la première conduite d'évacuation (103), une alimentation de l'air de la cabine dans la batterie lithium-air (106) par la seconde conduite d'amenée (102) et une évacuation d'air hors de la batterie lithium-air (106) par la seconde conduite d'évacuation (104) étant empêchées dans le premier état de commutation, et au moyen duquel, dans un second état de commutation du moyen (105), la batterie lithium-air (106) est alimentée par la seconde conduite d'amenée (102) uniquement en air de la cabine, qui est reconduit comme air de cabine traité dans l'intérieur de la cabine uniquement par la seconde conduite d'évacuation (104) après avoir traversé la batterie lithium-air (106), une alimentation de l'air ambiant vers la batterie lithium-air (106) par la première conduite d'amenée (101) et une évacuation de l'air hors de la batterie lithium-air (106) par la première conduite d'évacuation (103) étant empêchées dans le second état de commutation, et
- un appareil de commande (108), au moyen duquel le moyen commutable (105) est commandé en fonction d'un état de charge actuel de la batterie lithium-air (106),
- dans lequel :
- l'intérieur de la cabine forme, avec la seconde conduite d'amenée (102), la batterie lithium-air (106) et la seconde conduite d'évacuation (104), un système fermé étanche à la pression,
- le consommateur électrique (113) est alimenté en énergie électrique par la batterie lithium-air (106) uniquement dans le premier état de commutation,
- la commutation dans le second état de commutation n'est effectuée que lorsqu'un état prédéfinissable de l'aéronef est présent, et
- le traitement de l'air de la cabine est effectué dans le second état de commutation lors de la traversée de la batterie lithium-air (106) par une séparation du dioxyde de carbone hors de l'air de la cabine et une alimentation en oxygène, en particulier par une réaction de l'air de la cabine avec le peroxyde de lithium Li₂O₂ présent dans la batterie lithium-air (106).

2. Dispositif selon la revendication 1,
**caractérisé en ce que** l'appareil de commande (108) est réalisé et configuré de telle manière que tant que l'état de charge actuel de la batterie lithium-air (106) se trouve au-dessus d'une valeur prédéfinie, le moyen (105) est commuté dans le premier état de commutation, et uniquement lorsque l'état de charge actuel passe sous cette valeur prédéfinie, le moyen (105) peut être commuté dans le second état de commutation.

3. Dispositif selon la revendication 2,
**caractérisé en ce que** la valeur prédéfinie se trouve entre 0 et 90 % de la valeur maximale d'état de charge, en particulier : est égale à 80 %, 70 %, 60 %, 50 %, 40 %, 30 %, 20 %, 10 %, ou 5 % de la valeur maximale d'état de charge.

4. Dispositif selon la revendication 2 ou 3,
**caractérisé en ce que** l'appareil de commande (108) est réalisé et configuré de telle manière que dès que l'état de charge actuel passe sous la valeur prédéfinie, le moyen (105) peut être commuté automatiquement dans le second état de commutation.

5. Dispositif selon l'une des revendications 1 à 4,
**caractérisé en ce que** l'état prédéfinissable de l'aéronef comprend les conditions suivantes :
- la valeur d'état de charge de la batterie lithium-air (106) est inférieure à 60 %,
- l'aéronef est en vol, et
- la hauteur de vol dépasse 914,4 m au-dessus du sol.

6. Dispositif selon la revendication 2 ou 3,
**caractérisé en ce que** l'appareil de commande (108) est réalisé et configuré de telle manière que dès que l'état de charge actuel passe sous cette valeur prédéfinie, le moyen (105) peut être commuté dans le second état de commutation uniquement par un actionnement manuel d'un moyen de saisie.

7. Dispositif selon l'une des revendications 1 à 6,
**caractérisé en ce que** l'au moins un consommateur (113) est un moteur électrique pour la propulsion de l'aéronef.

8. Dispositif selon l'une des revendications 1 à 7,
**caractérisé en ce qu'**un compresseur est branché dans la première conduite d'amenée (101), au moyen duquel une pression, avec laquelle l'air ambiant peut être alimenté dans la batterie lithium-air (106), peut être réglée, en particulier maintenue constante, et/ou **en ce qu'**un dispositif de régulation de température est branché dans la première conduite d'amenée (101), au moyen duquel une température avec laquelle l'air ambiant peut être alimenté dans la batterie lithium-air (106), peut être régulée, en particulier maintenue constante.

9. Dispositif selon l'une des revendications 1 à 8, **caractérisé en ce que** la batterie lithium-air (106) comporte une cathode (107) poreuse, et la batterie lithium-air (106) est réalisée de telle manière que seule la cathode (107) poreuse peut être traversée par l'air ambiant et l'air de la cabine.

10. Aéronef comportant un intérieur de cabine étanche à la pression et aux gaz et un dispositif selon l'une des revendications 1 à 9, l'aéronef comportant une ou plusieurs batteries lithium-air (106).

11. Aéronef selon la revendication 10,
**caractérisé en ce que** le consommateur (113) est un moteur électrique pour la propulsion de l'aéronef.
